# EUROPEAN PATENT APPLICATION

(11) **EP 2 985 648 A1**
(43) Date of publication of application: **17.02.2016**
(21) Application number: 15002416.4
(22) Date of filing: 13.08.2015
(51) Int. Cl.: G02B 7/182, B60R 1/06, B60R 1/08, B60R 1/12

(54) **TECHNIQUES FOR AUTOMATED BLIND SPOT VIEWING**

(30) Priority: 13.08.2014 US 201414458458
(71) Applicant: Sensory Incorporated, Santa Clara, California 95054 (US)
(72) Inventor: Mozer, Todd F., Los Altos Hills, CA 94024 (US); Vermeulen, Pieter J., Portland, OR 97225 (US)
(74) Representative: Müller-Boré & Partner Patentanwälte PartG mbB

(57) **Abstract**

Techniques for enabling automated blind spot viewing in a vehicle are provided. In one embodiment, a computer system within the vehicle can determine that a driver of the vehicle is gazing at a side view mirror. The computer system can then automatically facilitate viewing of objects in the driver's blind spot in response to the determination.

## Description

### BACKGROUND

One common challenge faced by drivers of motor vehicles such as cars, trucks, buses, and the like is ensuring that the side view mirrors of their vehicles are correctly positioned at all times. If the driver of a particular vehicle has not correctly positioned the vehicle's side view mirrors, the driver may have blind spots in his/her field of view, potentially leading to accidents when performing lane changes or other maneuvers. Note that the appropriate side view mirror positions for one individual A may be wrong for another individual B due to, e.g., height, posture, preferred seating position, etc. Thus, if A and B were to share the same vehicle (which is common in families), A and B may need to re-adjust the side view mirrors each time they switch off driving duties, which can be burdensome and error-prone.

Some existing vehicles can memorize a predefined number of different side view mirror positions and can automatically adjust the side view mirrors to a memorized position upon a key press or upon detection of a particular driver's key. While this system mitigates the "driver switch off" problem noted above, it does not ensure that each driver has correctly adjusted the side view mirrors for his/her characteristics in the first place. Further, this system becomes less useful as the number of individuals sharing a single vehicle increases beyond the number of memory slots.

Some existing vehicles also incorporate a "blind spot detection" system that relies on sensors built into the side and/or rear of the vehicle. If the sensors detect movement, they cause the vehicle to display a warning signal to the driver indicating that there might be another vehicle or other object in the driver's blind spot. While these blind spot detection systems serve as a useful, secondary mechanism for making a driver aware of his/her surroundings, they do not completely eliminate the need for the driver to correctly position and check the side view mirrors while driving. For instance, it is possible for the sensors to fail or otherwise become inoperable for a period of time (due to, e.g., heavy rain, dirt, etc.), which can prevent the system from reporting the presence of a close vehicle/object in the driver's blind spot when one is actually present.

### SUMMARY

Techniques for enabling automated blind spot viewing in a vehicle are provided. In one embodiment, a computer system within the vehicle can determine that a driver of the vehicle is gazing at a side view mirror. The computer system can then automatically facilitate viewing of objects in the driver's blind spot in response to the determination.

A further understanding of the nature and advantages of the embodiments disclosed herein can be realized by reference to the remaining portions of the specification and the attached drawings.

### BRIEF DESCRIPTION OF THE DRAWINGS

FIG. 1 depicts a first flowchart for enabling automated blind spot viewing according to an embodiment.
FIG. 2 depicts a second flowchart for enabling automated blind spot viewing according to an embodiment.
FIG. 3 depicts a third flowchart for enabling automated blind spot viewing according to an embodiment.
FIG. 4 depicts an exemplary computer system according to an embodiment.

### DETAILED DESCRIPTION

In the following description, for purposes of explanation, numerous examples and details are set forth in order to provide an understanding of specific embodiments. It will be evident, however, to one skilled in the art that certain embodiments can be practiced without some of these details, or can be practiced with modifications or equivalents thereof.

### 1. Overview

The present disclosure describes techniques that can be implemented by a computer system/device within a vehicle (e.g., a car, truck, bus, motorcycle, etc.) for automatically enabling the driver of the vehicle to view his/her blind spots while driving. As used herein, the term "blind spot" refers to an area around the vehicle that is not visible to the driver while at the vehicle's controls, either by looking into the side view or rear view mirrors. Such blind spots are typically found at the sides of the vehicle and are often the result of incorrect positioning of the vehicle's mirrors (with respect to the characteristics of the driver).

According to one set of embodiments, the computer system can determine that the driver is gazing at a particular side view mirror. This determination can be performed using, e.g., a camera mounted in the vehicle's steering wheel, or located somewhere else within or outside the vehicle. The computer system can then automatically facilitate viewing of the driver's blind spot (assuming such a blind spot exists) in response to the determination. For example, in certain embodiments, the computer system can automatically adjust (e.g., pan, reposition based on driver's head position, etc.) the side view mirror to allow viewing of the blind spot. In another embodiment, the computer system can display, on a portion of the side view mirror or another location within the vehicle, an instantaneous video stream of the side of the vehicle on which the side view mirror is located. With these techniques, the driver's visibility can be significantly improved, thereby making lane changes and other similar maneuvers safer to perform.

The foregoing and other aspects of the present invention are described in further detail in the sections that follow.

### 2. Specific Embodiments

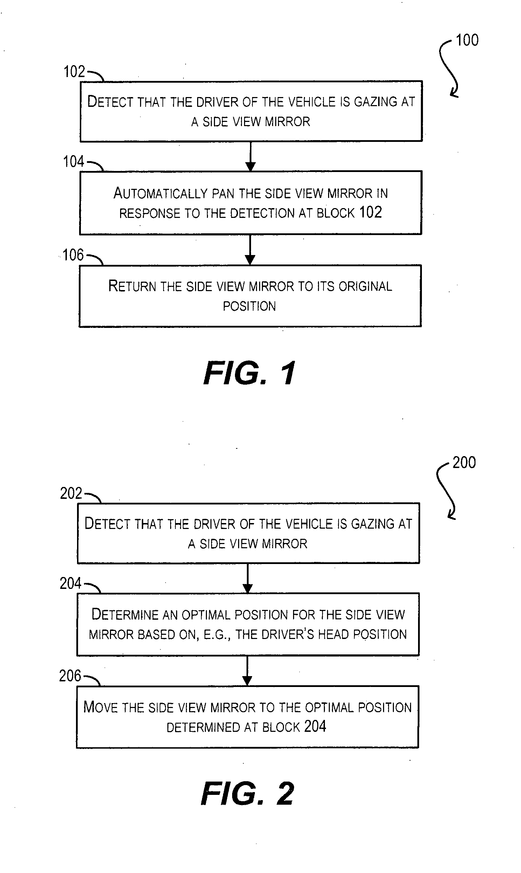

FIG. 1 depicts a flowchart 100 of a first technique for enabling automated blind spot viewing within a vehicle according to an embodiment. It is assumed that flowchart 100 is performed by a computer system located/embedded in the vehicle, or via a combination of local (i.e., in-vehicle) and remote (e.g., cloud-based) computing resources.

Starting with block 102, the computer system can first detect that the driver of the vehicle is gazing at a side view mirror (indicating that the driver likely wants to make a lane change or otherwise turn towards the direction of the mirror). In certain embodiments, the computer system can perform this detection via a vision-based process. For example, the computer system can (1) capture, via a camera embedded in the vehicle's steering wheel (or at some other location within or outside the vehicle), a video stream or a set of images of the driver's face/head; (2) calculate, using the captured video/images, the driver's direction of gaze; and (3) determine, based on the driver's direction of gaze and the known location of the side view mirror, that the driver is looking at the mirror. As part of step (2), the computer system can take into account the movement and/or positioning of the driver's eyes/pupils in order to determine the driver's direction of gaze, either separately or in combination with head/face positioning. In alternative embodiments, the computer system can perform the detection of block 102 via other types of techniques (e.g., motion tracking, etc.).

In a particular embodiment, the computer system may require that the driver's direction of gaze be pointed towards the side view mirror for a predetermined period of time (e.g., two seconds) before concluding that the driver is, in fact, gazing at the mirror for the purpose of initiating a driving maneuver.

At block 104, the computer system can automatically pan the side view mirror in response to the detection performed at block 102. For instance, in one embodiment, the computer system can pan the side view mirror through its full range of motion (to ensure that the mirror's field of view sweeps through the driver's blind spot). In another embodiment, the computer system can perform a more limited panning motion based on where it believes the driver's blind spot (or objects of interest) to be. In this latter case, the computer system may incorporate data streams from other sensors or cameras without/outside the vehicle. For example, if the vehicle has an external sensor/camera, the computer system can receive input from the external sensor/camera for detecting movement near the side of the vehicle where the side view mirror is located. The computer system can then limit the panning motion it performs to the location where the movement was detected, thereby increasing the speed of the panning operation and focusing the driver's attention on the particular areas around the vehicle that are likely to contain objects of interest (e.g., vehicles, bicycles, pedestrians, etc.).

Finally, at block 106, the computer system can return the side view mirror to its original position (prior to the panning of block 104). In one embodiment, the computer system can return the side view mirror to its original position once the panning of block 104 is complete. In other embodiments, the computer system can perform this step after a predetermined period of time has passed, or in response to other criteria or events (e.g., the driver looks away from the side view mirror, the driver issues a voice command for the panning to stop, etc.).

FIG. 2 depicts a flowchart 200 of a second technique for enabling automated blind spot viewing within a vehicle according to an embodiment. Flowchart 200 can be performed by the same computer system of flowchart 100 of FIG. 1.

At block 202, the computer system can detect that the driver of the vehicle is gazing at a side view mirror. The processing for this step can be substantially similar to block 102 of FIG. 1.

At block 204, the computer system can determine an optimal position for the side view mirror based on the driver's head position. As used herein, the "optimal position" for the mirror refers to the position that eliminates any blind spots from the driver's field of view (if possible in view of the vehicle's structure). In various embodiments, this optimal position can be determined by identifying the location/position of the driver's head (via, e.g., the camera discussed within respect to block 102 of FIG. 1), and then calculating the optimal position in view of the driver's head position.

Once the optimal position for the side view mirror has been determined, the computer system can move the mirror to that optimal position (block 206). With this technique, the driver does not need to manually adjust the position of the side view mirrors each time he/she enters the vehicle, which can be particular useful if the driver shares the vehicle with other drivers.

In some embodiments, the computer system can perform this automatic adjustment a single time when the driver first gets in the vehicle. In other embodiments, the computer system can perform this automatic adjustment each time the driver gazes at the side view mirror (as shown in FIG. 2), thereby allowing the mirror to dynamically adapt to changes in the driver's head position as he/she drives. For example, the driver may begin to slump after driving for a while, which can change the optimal position of the side view mirror for the driver.

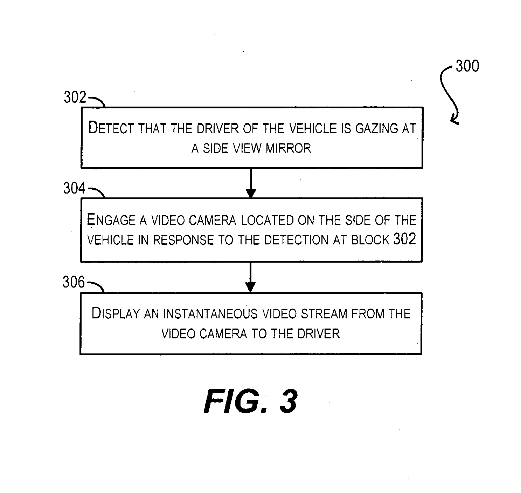

FIG. 3 depicts a flowchart 300 of a third technique for enabling automated blind spot viewing within a vehicle according to an embodiment. Flowchart 300 can be performed by the same computer system of flowchart 100 and 200 of FIGS. 1 and 2.

At block 302, the computer system can detect that the driver of the vehicle is gazing at a side view mirror. The processing for this step can be substantially similar to blocks 102 and 202 of FIGS. 1 and 2.

At block 304, the computer system can turn on/engage a video camera located on the side of the vehicle where the side view mirror is located.

Finally, at block 306, the computer system can display (either on the side view mirror or at some other location, such as the vehicle's multimedia/navigation screen) an instantaneous video stream from the video camera that is engaged at block 304. In this way, the driver can view the area next to the vehicle (including any blind spots) at an angle/field of view that would not be possible using the side view mirror alone.

Although not shown in FIG. 3, the computer system can display the video stream at block 306 for a predetermined period of time (e.g., five seconds). Alternatively, the computer system can automatically turn off the video stream (and disengage the video camera) when the driver has completed a lane change/driving maneuver on that side of the vehicle.

### 3. Exemplary Computer System

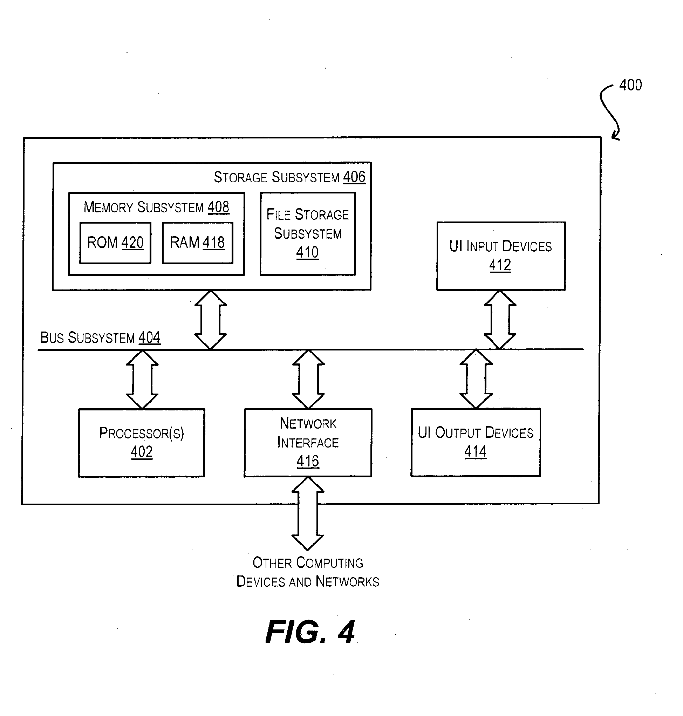

FIG. 4 is a simplified block diagram of a computer system 400 that may be used to implement the foregoing embodiments of the present invention. As shown, computer system 400 can include one or more processors 402 that communicate with a number of peripheral devices via a bus subsystem 404. These peripheral devices can include a storage subsystem 406 (comprising a memory subsystem 408 and a file storage subsystem 410), user interface input devices 412, user interface output devices 414, and a network interface subsystem 416.

Bus subsystem 404 can provide a mechanism for letting the various components and subsystems of computer system 400 communicate with each other as intended. Although bus subsystem 404 is shown schematically as a single bus, alternative embodiments of the bus subsystem can utilize multiple busses.

Network interface subsystem 416 can serve as an interface for communicating data between computer system 400 and other computing devices or networks. Embodiments of network interface subsystem 416 can include wired (e.g., coaxial, twisted pair, or fiber optic Ethernet) and/or wireless (e.g., Wi-Fi, cellular, Bluetooth, etc.) interfaces.

User interface input devices 412 can include a touch-screen incorporated into a display, a keyboard, a pointing device (e.g., mouse, touchpad, etc.), an audio input device (e.g., a microphone), and/or other types of input devices. In general, use of the term "input device" is intended to include all possible types of devices and mechanisms for inputting information into computer system 400.

User interface output devices 414 can include a display subsystem (e.g., a flat-panel display), an audio output device (e.g., a speaker), and/or the like. In general, use of the term "output device" is intended to include all possible types of devices and mechanisms for outputting information from computer system 400.

Storage subsystem 406 can include a memory subsystem 408 and a file/disk storage subsystem 410. Subsystems 408 and 410 represent non-transitory computer-readable storage media that can store program code and/or data that provide the functionality of various embodiments described herein.

Memory subsystem 408 can include a number of memories including a main random access memory (RAM) 418 for storage of instructions and data during program execution and a read-only memory (ROM) 420 in which fixed instructions are stored. File storage subsystem 410 can provide persistent (i.e., non-volatile) storage for program and data files and can include a magnetic or solid-state hard disk drive, an optical drive along with associated removable media (e.g., CD-ROM, DVD, Blu-Ray, etc.), a removable flash memory-based drive or card, and/or other types of storage media known in the art.

It should be appreciated that computer system 400 is illustrative and not intended to limit embodiments of the present invention. Many other configurations having more or fewer components than computer system 400 are possible.

The above description illustrates various embodiments of the present invention along with examples of how aspects of the present invention may be implemented. The above examples and embodiments should not be deemed to be the only embodiments, and are presented to illustrate the flexibility and advantages of the present invention as defined by the following claims. For example, although the techniques of FIGS. 1-3 are described as being triggered by the detection of the driver gazing at a side view mirror, in some embodiments these techniques may be triggered by other conditions/events. For instance, one or more of these techniques may be triggered by, e.g., a voice command, the user engaging a turn signal, the user engaging a particular gear, or the like.

Further, although certain embodiments have been described with respect to particular process flows and steps, it should be apparent to those skilled in the art that the scope of the present invention is not strictly limited to the described flows and steps. Steps described as sequential may be executed in parallel, order of steps may be varied, and steps may be modified, combined, added, or omitted.

Yet further, although certain embodiments have been described using a particular combination of hardware and software, it should be recognized that other combinations of hardware and software are possible, and that specific operations described as being implemented in software can also be implemented in hardware and vice versa.

The specification and drawings are, accordingly, to be regarded in an illustrative rather than restrictive sense. Other arrangements, embodiments, implementations and equivalents will be evident to those skilled in the art and may be employed without departing from the spirit and scope of the invention as set forth in the following claims.

## Claims

1. A method comprising:
determining, by a computer system, that a driver of a vehicle is gazing at a side view mirror; and
automatically facilitating, by the computer system in response to the determining, viewing of objects in the driver's blind spot.

2. The method of claim 1 wherein determining that the driver of the vehicle is gazing at the side view mirror comprises:
capturing, via a camera located within or outside the vehicle, one or more images or a video stream of the driver's face;
calculating, based on the one or more images or the video stream, the driver's direction of gaze; and
determining that the driver is gazing at the side view mirror based on the location of the side view mirror and the driver's direction of gaze.

3. The method of claim 2 wherein the calculating takes into account movement or positioning of the driver's pupils.

4. The method of any one of claims 1 to 3 wherein automatically facilitating viewing of objects in the driver's blind spot comprises automatically adjusting the side view mirror.

5. The method of claim 4 wherein automatically adjusting the side view mirror comprises panning the side view mirror.

6. The method of claim 5 further comprising returning the side view mirror to its original position after the panning is complete, after a predetermined period of time has passed, or after the computer system determines that the driver is no longer gazing at the side view mirror.

7. The method of any one of claims 4 to 6 wherein automatically adjusting the side view mirror comprises moving the side view mirror into an optimal position that eliminates the driver's blind spot.

8. The method of claim 7 wherein moving the side view mirror into the optimal position comprises:
detecting the driver's current head position; and
determining the optimal position based on the driver's current head position.

9. The method of any one of claims 4 to 8 further comprising detecting movement next to or behind the vehicle.

10. The method of claim 9 wherein automatically adjusting the side view mirror comprises moving the side view mirror to focus on the location of the detected movement.

11. The method of any one of claims 1 to 10 wherein automatically facilitating viewing of objects in the driver's blind spot comprises displaying, on a portion of the side view mirror or another location within the vehicle, an instantaneous video stream of the blind spot.

12. A non-transitory computer readable medium having stored thereon program code executable by a processor, the program code comprising
code that causes the processor to perform the method according to any one of the claims 1 to 11.

13. A computer system comprising:
a processor; and
a non-transitory computer readable medium having stored thereon executable program code which, when executed by the processor, causes the processor to perform the method according to any one of the claims 1 to 11.
